# EUROPEAN PATENT APPLICATION

(11) **EP 1 764 601 A1**
(43) Date of publication of application: **21.03.2007**
(21) Application number: 06018849.7
(22) Date of filing: 08.09.2006
(51) Int. Cl.: G01M 3/22, G01M 3/04

(54) **Gas sensor array system and method of detecting gas leaks at a connecting joint**

(30) Priority: 15.09.2005 US 227701
(71) Applicant: Air Products and Chemicals, Inc., Allentown, PA 18195-1501 (US)
(72) Inventor: Schweighardt, Frank Kenneth, Allentown, PA 18104-9558 (US); Zatko, David Arthur, Landsdale, PA 19446 (US)
(74) Representative: Schwabe - Sandmair - Marx

(57) **Abstract**

A system for detecting gas leaking out of a joint in a gas transport and/or storage system is provided. The joint has an interface formed of first and second confronting surfaces. The system includes a plurality of gas sensors and a data acquisition unit. The sensors are adapted for mounting at spaced locations with respect to one another about at least a portion of the joint closely adjacent the confronting surfaces and are configured, e.g., are flexible, so that they can be readily mounted thereat irrespective of the contour of that portion of the joint. The data acquisition unit receives signals from the sensors to provide an indication of leakage of gas at the interface and an indication of the location of the portion of the interface at which the leakage has occurred.

## Description

### BACKGROUND OF THE INVENTION

This invention relates generally to gas detecting systems, and more particularly to systems for detecting gas, e.g., hydrogen, leakage from point of connection joints in gas transport and/or storage systems.

In systems for conveying and/or storing gas, the detection of leakage of that gas is of considerable importance, particularly for applications involving flammable, explosive or otherwise hazardous gases. For example, in cryogenic applications, where hydrogen gas may be stored in tanks or other vessels and conveyed through conduits as gas or liquid, one common source of potential hydrogen gas leakage is at any releasably securable joint connecting two components of the system, e.g., a gasketed joint between two flanged conduits. Such releasably securable joints are typically held together by means of bolts extending through aligned openings in the confronting flanges or by clamps or some other means. Since the bolts/clamps are typically located at spaced positions about the periphery of the confronting flanges, if one or more of the bolts/clamps should not be tightened appropriately to form a gas-tight seal, the hydrogen gas may leak out of the gasket adjacent to the improperly tightened bolt/clamp. Thus, the leakage point can be at any position(s) about the periphery of the joint. Moreover, even if the bolts/clamps are tightened appropriately, there may be one or more local breaks or defects in the gasket (O-ring or metal annular disk). Thus, the hydrogen gas can escape through that(those) break(s)/defect(s).

Past technology has used handheld flammable gas detectors to search for leaks. In another prior art technique, joints are encapsulated to capture all leakage and that gas is presented to one leak detector. However, such prior art systems are not without their drawbacks, e.g., false alarms could occur from other flammable gases in the area (e.g., gasoline and oil emissions from nearby autos). In addition, often times the leak can be missed by an operator not placing the gas leakage sensor close enough or in the right position relative to the source of the leak under the ambient weather conditions (temperature, wind direction and humidity). The low density of hydrogen exacerbates leak detection because leaked hydrogen gas may rise in non-intuitive ways compared to heavy hydrocarbons, which can sink. Leakage found in captured joints does not provide leak location, other than somewhere around the joint, and additional work needs to be performed to locate the leak. In addition, captured joints do not provide information on multiple leaks in the same joint.

The patent literature includes several systems for detecting gas leaks. See for example, EP1482292A2, which is assigned to the same assignee as this application. That application discloses an apparatus and process for measuring the concentration of hydrogen gas being transferred through a nozzle from a source container to a destination container and for providing an alert and/or taking action where hydrogen gas leaks may create an unsafe condition. Other gas sensor configurations are shown in U.S. Patent Nos. 5,279,795 (Hughes et al.); 6,293,137 (Liu et al.); 5,012,672 (McKee); 4,782,302 (Bastasz), 5,834,627 (Ricco et al.); and 5,932,797 (Myneni) and in Japanese applications JP2003149071A2, JP11023403A2 and JP03035138. See also, a paper by Mendoza, Kempen, Menon, Durets, Pflanze, Lieberman and Kazemi entitled "Multipoint Fiber Optic Hydrogen Sensor System For Detection of Cryogenic Leaks in Aerospace Applications" in "Proceedings of SPIE - The International Society For Optical Engineering (2001), 4204 (Fiber Optic Sensor Technology II), 139-150 and a paper by Keding, Kruse and Rieling appearing in Technische Ueberwachung (Dusseldorf) (2000), 41 (4), 32- 37.

While the aforementioned prior art systems may be suitable for their intended purposes they nevertheless leave much to be desired from one or more of the standpoints of simplicity of construction, ease of use, molecular specificity (e.g., hydrogen) and ability to determine the precise location of a leak. With respect to the latter drawback of the prior art, since the gas leak can be anywhere around the circumference of the joint, locating the leak in any direction can be a hit or miss proposition. If no directionality can be made, then all the bolts holding the joint together will likely be tightened, which action can lead to over tightening and bolt/gasket failure.

Accordingly, a need exists to provide a system and method for determining where/when and how much (concentration of species per unit volume of air) a gas leakage is occurring in gas transport and/or gas storage areas that have multiple leak potentials, e.g., in one or more joints each formed by a pair of confronting flanges held together by multiple bolts/clamps where one bolt is not tightened enough and allows gas leakage in that small area, or where the gasket or other sealing means may have a local break or leak.

The subject invention overcomes many of the drawbacks of the prior art by making use of a plurality of sensors located at positions, e.g., stationary or fixed, as close as possible to potential leak site(s) to provide signals indicative of a leak to a data acquisition unit which can then determine or identify the dominant leak direction, whereupon corrective action can be taken, e.g., tightening the bolt(s) closest to the leak. Moreover, the subject invention optionally enables one to monitor and/or track changes in the leakage rate. All of this is accomplished through the use of an array of small sensors which do not take up significant space and are readily adapted to be mounted adjacent the potential gas leak site(s).

### BRIEF SUMMARY OF THE INVENTION

A detection system for detecting gas, e.g., hydrogen, leaking out of a connecting joint having an interface formed of first and second confronting surfaces. The joint has a first outer surface, e.g., a flange, located adjacent the first confronting surface and a second outer surface, e.g., a flange, located adjacent the second confronting surface. The joint may form a portion of a gas transport and/or storage system wherein the confronting surfaces are held together by plural bolts, with a gasket located at the interface formed between the confronting surfaces.

The detection system 20 basically comprises a plurality, e.g., an array, of gas sensors and an associated data acquisition unit. The plural sensors are adapted for mounting at spaced locations with respect to one another about at least a portion of at least one of the first and second outer surfaces, e.g., the flanges, closely adjacent the interface. The data acquisition unit can be arranged to be located on the flange or remote from the interface. Each of the plural gas sensors comprises a base and a gas detecting element mounted on the base. The gas detecting element of each sensor is coupled, e.g., wired, to the data acquisition unit to provide a signal thereto.

The base of each sensor is configured, e.g., is a flexible base, or a small footprint base, etc., to enable the gas detecting element associated therewith to be readily mounted onto a portion of the first or second outer surface of the joint at a respective one of the spaced locations irrespective of the contour of the portion of the surface thereat. The data acquisition unit is arranged to receive signals from the sensors to provide an indication of leakage of gas at the interface of the joint and an indication of the location of the portion of the interface at which the leakage has occurred.

### BRIEF DESCRIPTION OF THE DRAWING

Fig. 1 is a side elevation view of one exemplary embodiment of a detection system constructed in accordance with the subject invention, the system having a plurality of gas sensors shown mounted under respective caps at spaced locations about the periphery of one flange at a joint of a pair of interconnected flanged conduits;

Fig. 2 is an isometric view of the system shown in Fig. 1, but with one of the conduits removed (not shown);

Fig. 3 is an isometric view similar to Fig. 2, but showing an alternative embodiment of a detection system constructed in accordance with this invention;

Fig. 4 is an enlarged isometric view of one type of sensor that may be used in the system of Figs. 1 and 2, but with that sensor's cap removed; and

Fig. 5 is an enlarged isometric view, similar to Fig. 4, but showing another type of sensor that may be used in the system of Figs. 1 and 2, but with that sensor's cap removed.

### DETAILED DESCRIPTION OF THE PREFERRED EMBODIMENT

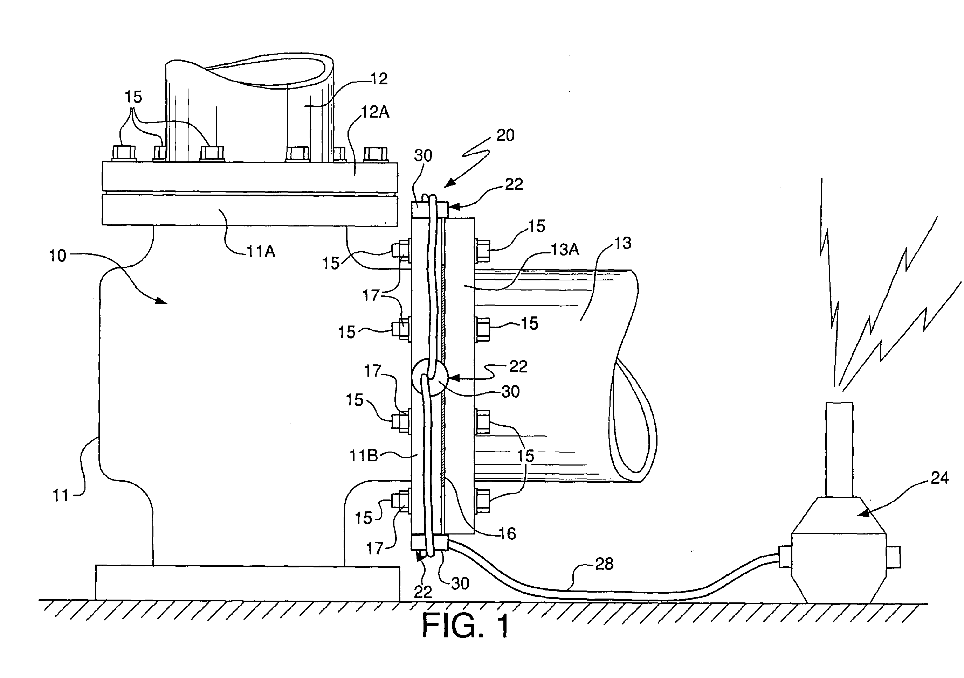

Referring now to the various figures of the drawing wherein like reference numbers refer to like parts, there is shown in Fig. 1 a first exemplary embodiment of a gas leakage detection system 20 constructed in accordance with this invention. The system 20 is arranged to be used in any gas transport and/or storage system 10. The leakage detection system 20 has particular utility in gas transport and/or storage systems which contain an explosive, flammable or otherwise hazardous gas, e.g., hydrogen. Moreover, the leakage detection system 20 may be used in a cryogenic system. However, for such an application the sensors would have to be adapted to withstand icing, temperature fluctuations and other harsh conditions. Thus, the gas transport system 10 is merely exemplary of a myriad of systems that the subject invention can be used in. Moreover, while the subject gas leakage detection system of this invention will be described for detecting hydrogen that also is merely exemplary. Thus, the subject gas leakage detection system 20, with appropriate sensors, can be used for detecting any type of gas which may tend to leak out of a gas transport and/or storage system 10, but has particular utility for use with light flammable gases.

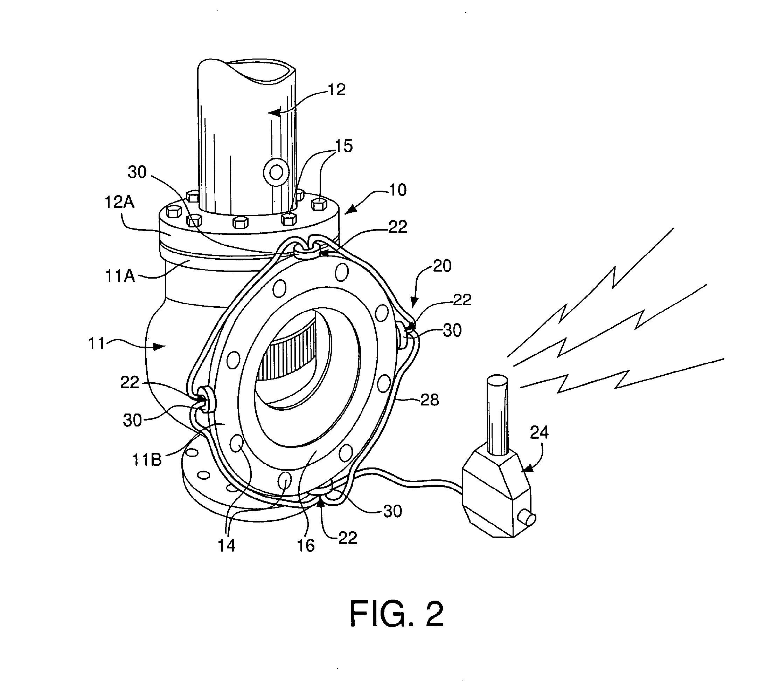

Before describing the gas leakage detection system 20, a brief description of the exemplary gas transport and/or storage system 10 is in order. To that end, as can be seen in Fig. 1, the system 10 basically comprises a compressor 11 (or any other device that may be used in the system) connected between a pair of flanged conduits 12 and 13. Each conduit is a hollow member having flange at each end (although only the proximally located flange of each conduit can be seen in Fig. 1). Thus, the conduit 12 includes a flange 12A, while the conduit 13 includes a flange 13A. As best seen in Fig. 2 each flange includes a plurality of holes 14 that are equidistantly spaced about the periphery of the flange for receipt of respective bolts 15. The compressor 11 also includes a pair of flanges 11A and 11B. Each of the compressor's flanges includes a plurality of holes 14 equidistantly spaced about the periphery of the flange for receipt of respective bolts 15. The flange 11 A of the device 11 is arranged to be releasable, yet secured to the flange 12A of the conduit 12 by means of plural bolts 15 extending through aligned holes 14 in the flanges 11A and 12A. A gasket 16 or sealing member (e.g., O-ring, annular disk, etc.) of any suitable type is interposed between the confronting flanges and is arranged to be compressed slightly when the bolts are tightened to form a gas-tight interface or joint. The holes in the flange 11 A may be threaded to accept the threaded ends of the bolts 15 extending through the flange 12A or may be through-holes, in which case nuts (not shown) would be screwed onto the extending threaded ends of the bolts to hold the two flanges 11A and 12A together, with the gasket 16 interposed therebetween. The flange 11 B of the device 11 is also arranged to be releasable, yet secured to the flange 13A of the conduit 13 by means of plural bolts 15 extending through respective aligned holes 14 in the flanges 11A and 12A. In this exemplary embodiment the holes in the flange 11 B are through-holes, whereupon respective nuts 17 are screwed onto the extending threaded ends of the bolts 15 to hold the two flanges 11 B and 13A together. A gasket 16 of any suitable construction is interposed between the confronting flanges and is arranged to be compressed slightly when the bolts 14 are tightened to form a gas-tight interface.

Notwithstanding the tightening of the bolts/nuts hydrogen gas, within the system shown may tend to leak out through one or more of the gaskets at the connecting joints in one or more locations about the periphery of that (those) gasket(s). To that end, the gas leakage detection system 20 is provided to rapidly detect any such leaks and to identify the location of such leaks to operating personnel or to take some automated action, e.g., shut down or isolate the portion of the system at which the leak is occurring.

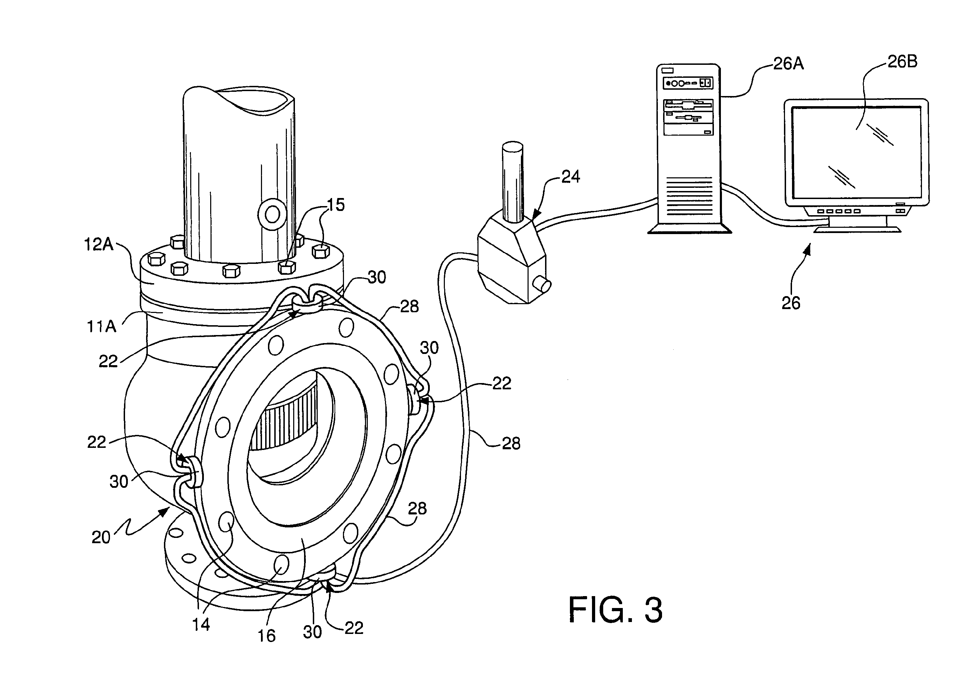

The details of the leakage detection system 20 will be described later. Suffice it for now to state that the system 20 basically includes plural gas sensors 22, a data acquisition unit 24 and a remote computer/control system 26 (Fig. 3). The gas sensors 22 are arranged to be stationary and mounted in an array at respective positions immediately adjacent the joint(s) to be monitored (e.g., adjacent the interface of the confronting flanges where the hydrogen gas may tend to leak). The array of sensors 22 is coupled to the data acquisition unit 24, via cables or wirelessly (as will be described later). The data acquisition unit 24 is located at any convenient and safe location somewhat remote from the location of the sensors. The data acquisition unit 24 is arranged to receive signals from the array of sensors 22, in order to determine the existence and location of a gas leak and provide signals, either wirelessly or via electrical conductors, to the computer control system 26, which signals are indicative of a leak(s) and its (their) location(s), so that corrective action can be undertaken.

It should be mentioned at this juncture that in the exemplary embodiment shown in Fig. 1 only one set or array of sensors is shown to detect gas leakage at the joint formed by the interface of the flanges 11B and 13A. Such a showing is in the interest of drawing simplicity. Thus, in practice, a set or array of sensors is preferably located at each joint through which hydrogen gas may leak. In such a case, a set of sensors 22 would also be provided adjacent the joint formed by the confronting flanges 11A and 12A.

In the exemplary embodiment of Figure 1, the system 20 is shown as including four sensors 22 coupled to the data acquisition unit 24. This arrangement is also merely exemplary of numerous arrangements contemplated by this invention. In particular, any number and type of sensors can be used, depending upon the size and shape of the joint to be monitored for leakage, as well as other factors. Since the leakage may come from any position about the circumference of the gasket 16, the sensors are preferably placed equidistantly about the joint contiguous with the gasket. However, an equidistantly spaced arrangement of the sensors is not mandatory. Thus, the spacing between the sensors can be whatever spacing is desired for the particular application, e.g., some sensors can be located closer to each other at locations adjacent the gasket where a leak is more likely to occur.

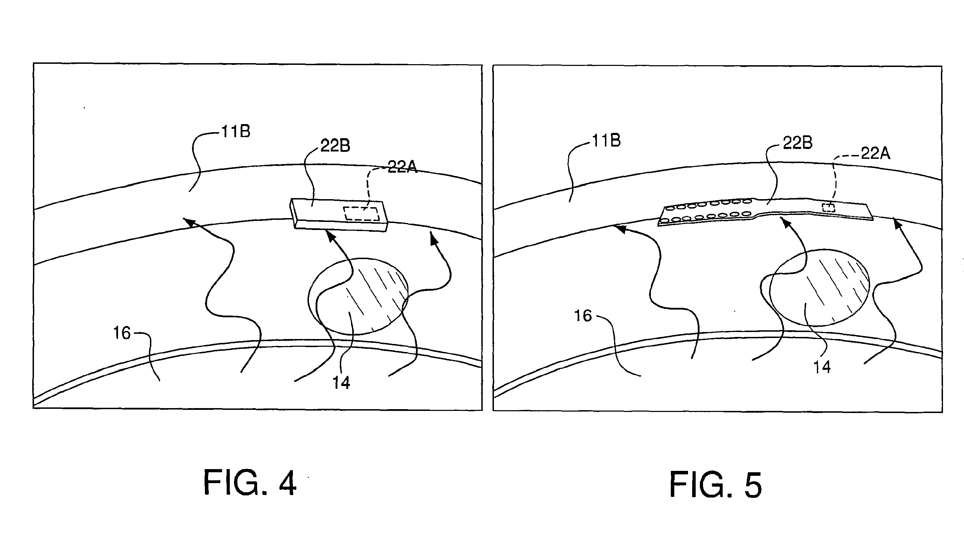

Various types of conventional sensors can be used in the subject invention. One particularly effective sensor is the H2SCAN flexible hydrogen sensor that is commercially available from H2Scan of Valencia, California. That sensor includes a detector element 22A mounted on a base or backing 22B formed of a Mylar type material for flexibility. The base or backing is quite thin, e.g., <2 mm thick. Accordingly, as best seen in Fig. 5, the sensor 22 can be readily mounted and secured on the curved outer periphery of the flange forming the joint to be monitored so that the detector element 22A faces downward toward and slightly over the interface of the joint. The securement of the sensor can be accomplished by any suitable means, e.g., an adhesive, glue, double sided tape, etc., and can be permanent or releasable. If the mounting of the sensor adjacent the joint is to be releasable, so that a sensor can be removed and/or replaced, the means used to releasably secure the sensor in position should nevertheless be resistant to accidental removal or displacement of the sensor.

Since the base 22B of each sensor 22 is flexible and thin, each sensor 22 can be located and mounted on any shaped surface, e.g., the circular outer periphery of the flange 11 B, adjacent a joint to be monitored, irrespective of the contour of that surface. In Fig. 4, another type of sensor is shown. This sensor is also a conventional device such as that sold by H2scan APPLIEDSENSOR of Valencia, California, and that includes a gas detector element 22A. However, the base 22B of this sensor is not flexible. Thus, to enable it to be readily mounted on any shaped surface, the base is of a very small footprint, e.g., less than one square inch. That sensor is also mounted so that its detector element 22A faces downward and slightly over the interface of the joint.

Irrespective of the type of sensors utilized, e.g., whether a sensor of the type shown in Figs. 4 or 5 or any other type of sensor, they are electrically connected or ganged together so that their electrical output signals, which are indicative of the detection of the gas, e.g., hydrogen, are provided to the data acquisition unit 24. To that end, plural electrical conductors 28 connect the sensors 22 to the data acquisition unit 24. Power for the sensors is provided via the conductors 28 from the data acquisition unit 24 or from some other power source (not shown). In the exemplary embodiment shown the sensors are powered by 24 VDC, and are configured in an array to produce a patterned response for hydrogen concentrations from approximately 1 ppm v/v, and preferably 100 ppm v/v, to greater than 50,000 ppm (LEL H2=40,000 ppm in air). The sensors 22 are, however, capable of operation in excess of 50,000 ppm. If desired the output signal from the sensors 22 can be transmitted wirelessly to the data acquisition unit. Power for the sensors in such a case would have to be provided by means (not shown). In any case, the sensor array sends back a directed signal that is used by the data acquisition unit to identify the leak position and level, and track changes (increase/decrease/steady) as a function of time in a Class I/Div II Group B or higher, Group A safety rated location. The data acquisition unit 24 is a conventional device. One particularly suitable device is that sold by Fourier Systems of Atlanta, Georgia, under the model designation DaqPRO.

The output signal from the data acquisition unit is arranged to be provided to a remotely located computer/control system 26. One exemplary embodiment of the computer system 26 is shown in Fig. 3 and basically comprises a computer or CPU unit 26A and an associated monitor 26B. Output signals from the data acquisition unit 24 can be provided via a cable 30 to the computer 26A, or can be transmitted wirelessly from the data acquisition unit as shown in Fig. 2. In either case the computer 26A is arranged to receive the output signals from the data acquisition unit to display leakage conditions on the monitor 26B and/or provide an audible warning that a leak has been detected. The computer preferably includes software to produce a display showing the species in question, location and direction of the leak(s) with respect to the joint(s) being monitored. Moreover, the display can provide trend data revealing the state of the leak over time. In any case, operating personnel can then be dispatched to the location of the leak to remediate it. The computer system 26 may also provide signals to control means, e.g., associated valves (not shown), located in the system 10 to thereby isolate the leak until it can be remediated.

In order to prevent or otherwise minimize the occurrence of the sensors 22 becoming fouled or otherwise degraded by dust, moisture or other adverse ambient conditions, each of the sensors 22 is preferably provided with a hollow cap 30 to protect the gas detecting element 22A of the sensor. The cap 28 can be of any suitable shape. In the exemplary embodiments each cap basically comprises an inverted cup-like member that is disposed over an associated gas detector 22A and base 22B of the sensor 22. The cap material of construction will be selected as not to restrict gas permeation to the sensor. The peripheral edge of the sidewall portion of each cap 28 is preferably in abutment with or immediately adjacent the underlying surface of the portion of the joint on which the sensor is mounted. Since any gas that will tend to leak out of the gasket (such as shown schematically by the arcuate arrows in Figs. 4 and 5) will exit between the confronting flanges of at that joint, it is preferably that the cap 28 bridge slightly over the gap between the confronting flanges, such as shown in Fig. 1. Thus, any gas emanating from the gasket and passing out between the confronting flanges will be collected in the hollow cap for detection by the associated gas detector 22A.

. While the invention has been described in detail and with reference to specific examples thereof, it will be apparent to one skilled in the art that various changes and modifications can be made therein without departing from the spirit and scope thereof.

## Claims

1. A detection system for detecting gas leaking out of a connecting joint having an interface formed of first and second confronting surfaces, the joint having a first outer surface located adjacent the first confronting surface and a second outer surface located adjacent the second confronting surface, said detection system comprising a plurality of gas sensors and a data acquisition unit, said plural sensors being adapted for mounting at spaced locations with respect to one another about at least a portion of the periphery of at least one of the first and second outer surfaces closely adjacent the interface, said data acquisition unit being arranged to be located remote from the interface, each of said plural gas sensors comprising a base and a gas detecting element mounted on said base, said gas detecting element of each sensor being coupled to said data acquisition unit to provide a signal thereto, said base being configured to enable the sensor element associated therewith to be readily mounted onto a portion of the first or second outer surface at a respective one of the spaced locations irrespective of the contour of the portion of the surface thereat, said data acquisition unit being arranged to receive signals from said sensors to provide an indication of leakage of gas at the interface of the joint and an indication of the location of the portion of the interface at which the leakage has occurred.

2. The system of Claim 1 wherein said data acquisition unit is arranged to provide an indication of the level of the leak.

3. The system of Claim 2 wherein said data acquisition unit is arranged to provide an indication of the level of the leak as a function of time to thereby track changes in the condition of the joint.

4. The system of Claim 1 wherein the joint forms a portion of a gas transport and/or storage system containing hydrogen and wherein each of said sensors is arranged to detect the presence of hydrogen and to provide a signal indicative thereof.

5. The system of Claim 4 wherein each of said sensors is specific for hydrogen detection and independent of other ambient matrix components in the gas transport and/or storage system.

6. The system of Claim 5 wherein each of said sensors is capable of detecting hydrogen in concentrations within the range of greater than 1 ppm, to approximately 50,000 ppm.

7. The system of Claim 1 wherein each of said sensors additionally comprises signal conveying means coupled to said gas detecting element, said signal conveying means comprising wires coupled to said data acquisition unit.

8. The system of Claim 7 wherein said data acquisition means is arranged to communicate wirelessly with a remotely located unit or system.

9. The system of Claim 1 wherein each of said sensors comprises a generally flexible base.

10. The system of Claim 1 additionally comprising respective cap members disposed over respective sensors.

11. A method for detecting gas leaking out of a joint having an interface formed of first and second confronting surfaces, the joint having a first outer surface located adjacent the first confronting surface and a second outer surface located adjacent the second confronting surface, said method comprising;
(a) providing a detection system comprising a plurality of gas sensors and a data acquisition unit, each of said plural gas sensors comprising a base and a gas detecting element mounted on said base, said gas detecting element of each sensor being coupled to said data acquisition unit to provide a signal thereto;
(b) mounting said plural sensors at spaced locations with respect to one another about at least a portion of the periphery of at least one of the first and second outer surfaces closely adjacent the interface, said base being configured to enable the sensor element associated therewith to be readily mounted onto a portion of the first or second outer surface at a respective one of the spaced locations irrespective of the contour of the portion of the surface thereat;
(c) locating said data acquisition unit remote from the interface;
(d) operating said system whereupon said data acquisition unit receives signals from said sensors to provide an indication of leakage of gas at the interface of the joint and an indication of the location of the portion of the interface at which the leakage has occurred.

12. The method of Claim 11 wherein said data acquisition unit provides an indication of the level of the leak.

13. The method of Claim 12 wherein said data acquisition unit provides an indication of the level of the leak as a function of time to thereby track changes in the condition of the joint.

14. The method of Claim 11 wherein the joint forms a portion of a gas transport and/or storage system containing hydrogen and wherein each of said sensors is arranged to detect the presence of hydrogen and to provide a signal indicative thereof.

15. The method of Claim 14 wherein each of said sensors is specific for hydrogen detection and independent of other ambient matrix components in the gas transport and/or storage system.

16. The method of Claim 15 wherein each of said sensors is capable of detecting hydrogen in concentrations within the range greater than 1 ppm to approximately 50,000 ppm.

17. The method of Claim 11 wherein each of said sensors comprises a generally flexible base and wherein said flexible base is bent into a shape conforming to the contour of the surface on which the sensor is mounted.

18. The method of Claim 11 additionally comprising providing respective cap members disposed over respective sensors to protect the sensors from ambient conditions.
